# EUROPEAN PATENT APPLICATION

(11) **EP 3 805 955 A1**
(43) Date of publication of application: **14.04.2021**
(21) Application number: 19202025.3
(22) Date of filing: 08.10.2019
(51) Int. Cl.: G06F 16/901, G06F 16/28

(54) **METHOD FOR ASSIGNING AT LEAST ONE QUERY TRIPLET TO AT LEAST ONE RESPECTIVE CLASS**

(71) Applicant: Siemens Aktiengesellschaft, 80333 München (DE)
(72) Inventor: Hildebrandt, Marcel, 81737 München (DE); Hubauer, Thomas, 85748 Garching bei München (DE); Joblin, Mitchell, 81825 München (DE); Ma, Yunpu, 81379 München (DE); Quintero Serna, Jorge Andres, 81377 München (DE); Ringsquandl, Martin, 83022 Rosenheim (DE)

(57) **Abstract**

The invention is directed to a computer-implemented method for assigning at least one query triplet (10) to at least one respective class, wherein the at least one respective class is true or false, comprising the steps of: a. Providing the at least one query triplet (10) and a knowledge graph with a plurality of triples; b. Extracting at least one affirmative argument (20) using reinforcement learning on the basis of the at least one query triplet (10) and the knowledge graph; wherein the at least one affirmative argument (20) indicates that the at least one query triplet (10) is true; c. Extracting at least one opposing argument (30) using reinforcement learning on the basis of the at least one query triplet (10) and the knowledge graph; wherein the at least one opposing argument (30) indicates that the at least one query triplet (10) is false and d. Assigning the at least one query triplet (10) to the at least one respective class using supervised machine learning depending on the at least two arguments (20, 30). Further, the invention relates to a corresponding computer program product and system.

## Description

### 1. Technical field

The present invention relates to a computer-implemented method for assigning at least one query triplet to at least one respective class. Further, the invention relates to a corresponding computer program product and technical system.

### 2. Prior art

Knowledge graphs are known from the prior art as graph-structured databases. The elementary unit of a knowledge graph is a triplet subject-predicate-object, often denoted as (head, relation, tail), (s, p, o) or (h, r, t). Each triplet defines one connection between two entities in the knowledge graph.

Usually, the knowledge graphs are used as knowledge base e.g. by Google and its services to enhance its search engine's results with information gathered from a variety of sources. The information is presented to users in an info box next to the search results.

Further exemplary use cases include fact checking and query answering. Concerning fact checking, the knowledge graphs can be used to integrate information from e.g. gas turbines in terms of maintenance records about e.g. which component was changed and when the component was changed. Concerning query answering, the knowledge graphs can be used to store information about hardware components and historical data about which components were purchased together in order to make intelligent recommendations about future purchase orders.

The knowledge graphs provide an abundant source of rich information. However, the data of the knowledge graphs are often incorrect and inherently incomplete. For example, erroneous data is a result of mistakes made by automated data extraction methods or human errors. Further, many queries of interest are not immediately answerable using the observed facts alone. The identification and correction of erroneous data can be a difficult and time-consuming task since it involves manual inspection of the data by experts.

According to prior art, e.g. hand crafted rules are applied on knowledge graphs. The disadvantage is that the rules are very complex and inapplicable on large amounts of data. The rules do not provide human interpretable justifications for their judgements. In many domains where life critical or mission critical systems utilize knowledge graphs, explainability and transparence of e.g. fact checking is essential for use acceptance and also due to legal requirements.

It is therefore an objective of the invention to provide a computer-implemented method for assigning at least one query triplet to at least one respective class in an efficient and reliable manner.

### 3. Summary of the invention

This problem is according to one aspect of the invention solved by computer-implemented method for assigning at least one query triplet to at least one respective class, wherein the at least one respective class is true or false, comprising the steps of:
a. Providing the at least one query triplet and a knowledge graph with a plurality of triples;
b. Extracting at least one affirmative argument using reinforcement learning on the basis of the at least one query triplet and the knowledge graph; wherein the at least one affirmative argument indicates that the at least one query triplet is true,
c. Extracting at least one opposing argument using reinforcement learning on the basis of the at least one query triplet and the knowledge graph; wherein
   the at least one opposing argument indicates that the at least one query triplet is false, and
d. Assigning the query triplet to the at least one respective class using supervised machine learning depending on the at least two arguments.

Accordingly, the invention is directed to a method for assigning a class to a query triplet. In other words, the query triplet is classified in either true or false.

In a first step, the input data is provided or received. The input data comprises the query triplet and a knowledge graph.

In the next steps, after reception of the input data, one or more arguments are determined from the knowledge graph by means of reinforcement learning on the basis of the received input data. Thereby, each argument is a path in the knowledge graph, which emanates from the query triplet. Two distinct sets of arguments are determined, affirmative and opposing arguments.

The affirmative arguments are arguments that the query triplet is true. Opposing arguments are arguments that the query triplet is false. In other words, two agents learn a policy conditioned on the query triplet that allows them to identify how to transition from one node in the knowledge graph to an adjacent node.

In a last step, the class is determined using supervised machine learning on the basis of the distinct arguments. Therefore, a trained classification model or machine-learning classifier is applied using machine learning during throughput.

To the contrary, in the training phase, a set of independent input data sets is used as training data set to train the machine learning model, in particular a classification model. The classification model is a neural network in a preferred embodiment. The class is used as classification target.

Thus, in other words, the classification model is untrained and used in the training process with a training input data set comprising training classes, whereas the classifier is used after training in the running system or for the method according to the invention.

The method according to the invention ensures an improved efficiency and accuracy in determining the class.

Moreover, the resulting output data is more reliable and less error-prone compared to prior art. This way, the output data and in particular the query triplet can serve as improved basis for more efficient subsequent processing steps, which are built on the reliable output data with e.g. the class. In particular, the knowledge graph can be extended with the query triplet, see further below.

The method according to the invention allows for fact checking and query answering in knowledge graphs based on debate dynamics. In other words, probabilistic inference is applied on knowledge graphs providing explanations in terms of proofs in the underlying knowledge graph.

In one aspect the supervised machine learning is a learning-based approach selected from the group, comprising
neural network, support vector machine, logistic regression, linear regression and random forest. Accordingly, the method can be applied in a flexible manner according to the specific application case, underlying technical system and user requirements. Neural networks have proven to be advantageous since they provide high reliability in recognition, can be trained flexibly and offer fast evaluation.

In another aspect the method further comprises the step of performing at least one action.

In another aspect, performing the at least one action depending on at least one determined score, wherein the at least one score is determined by using machine learning on the basis of the at least one query triplet and the knowledge graph and the at least one determined score is assigned to the query triplet.

In another aspect the at least one action is performed, if the at least one score equals or exceeds a predefined threshold.

In another aspect the at least one action is selected from the group, comprising:
- Outputting the at least one query triplet, the knowledge graph, the at least two arguments, the at least one class, the at least one score and/or any other related notification;
- Storing the at least one query triplet, the knowledge graph, the at least two arguments, the at least one class, the at least one score and/or any other related notification;
- Displaying the at least one query triplet, the knowledge graph, the at least two arguments, the at least one class, the at least one score and/or any other related notification;
- Transmitting the at least one query triplet, the knowledge graph, the at least two arguments, the at least one class, the at least one score and/or any other related notification to a computing unit for further processing; and
- Evaluating the at least one query triplet with the assigned at least one class and/or score.

Accordingly, the input data, data of intermediate method steps and/or resulting output data can be further handled. The output data is in particular the query triplet with the assigned class and/or score. One or more actions can be performed. The action can be equally referred to as measure.

The actions can be triggered depending on the predefined threshold, according to which, the score has to meet and/or exceed a predetermined threshold. These actions can be performed by one or more computing units of the technical system. The actions can be performed gradually or simultaneously. Actions include e.g. storing and processing steps. The advantage is that appropriate actions can be performed in a timely manner.

For example, output data and/or a related notification can be displayed to a user by means of a display unit, for example the most likely class or classes with scores exceeding a predetermined threshold. Further, the user can evaluate the provided output data.

In another aspect the method further comprises the step of confirming the at least one query triplet or overwriting the at least one query triplet depending on the evaluation.

In another aspect the evaluation and/or confirmation is performed by a user.

Accordingly, an evaluation can be performed on the basis of the provided output data.

The user can either confirm and thus accept the query triplet or reject and thus overwrite or adapt the query triplet. Alternatively, the evaluation can be performed automatically by a computing unit using evaluation software. This way, the reliability of the output data is further improved. The user interaction allows for an improved reliability since expert knowledge can be considered.

In another aspect the method further comprises the step of Extending the knowledge graph with the query triplet after confirmation. Accordingly, the confirmed query triplet can be added to the knowledge graph after performed evaluation and solely after confirmation. This way, the knowledge graph is enriched with reliable data.

A further aspect of the invention is a computer program product directly loadable into an internal memory of a computer, comprising software code portions for performing the steps according to the aforementioned method when said computer program product is running on a computer.

A further aspect of the invention is a technical system for assigning at least one query triplet to at least one respective class, wherein the at least one respective class is true or false, comprising:
a. Receiving unit for providing the at least one query triplet and a knowledge graph with a plurality of triples;
b. Extracting unit for extracting at least one affirmative argument using reinforcement learning on the basis of the at least one query triplet and the knowledge graph; wherein
   the at least one affirmative argument indicates that the at least one query triplet is true;
c. Extracting unit for extracting at least one opposing argument using reinforcement learning on the basis of the at least one query triplet and the knowledge graph;
   wherein
   the at least one opposing argument indicates that the at least one query triplet is false; and
d. Classification unit for assigning the at least one query triplet to the at least one respective class using supervised machine learning depending on the at least two arguments.

The units may be realized as any devices, or any means, for computing, in particular for executing a software, an app, or an algorithm. For example, the units may consist of or comprise a central processing unit (CPU) and/or a memory operatively connected to the CPU. The units may also comprise an array of CPUs, an array of graphical processing units (GPUs), at least one application-specific integrated circuit (ASIC), at least one field-programmable gate array, or any combination of the foregoing. The units may comprise at least one module which in turn may comprise software and/or hardware. Some, or even all, modules of the units may be implemented by a cloud computing platform.

### 4. Short description of the drawings

In the following detailed description, presently preferred embodiments of the invention are further described with reference to the following figures:
- Fig. 1: illustrates a flowchart of the method according to the invention.
- Fig. 2: illustrates a debate according to an embodiment of the invention.
- Fig. 3: illustrates the method according to an embodiment of the invention.

### 5. Detailed description of preferred embodiments

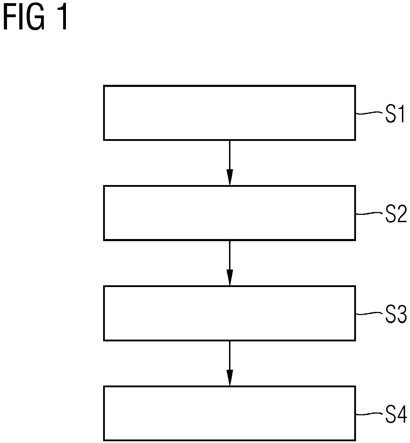

Fig. 1 illustrates a flowchart of the method according to the invention. The method for assigning at least one query triplet to at least one respective class, wherein the at least one class is true or false, comprises the following steps S1 to S4:
a. In a first step the at least one query triplet 10 and a knowledge graph with a plurality of triples in provided S1; The first step can be performed by a receiving unit;
b. In a second step at least one affirmative argument 20 using reinforcement learning on the basis of the at least one query triplet 10 and the knowledge graph is extracted S2; wherein
   the at least one affirmative argument indicates that the at least one query triplet 10 is true; The second step can be performed by an extracting unit;
c. In a third step at least one opposing argument 30 using reinforcement learning on the basis of the at least one query triplet 10 and the knowledge graph is extracted S3; wherein
   the at least one opposing argument indicates that the at least one query triplet 10 is false; The third step can be performed by an extracting unit;
   and
d. In a last step the query triplet 10 is assigned to the at least one class using supervised machine learning depending on the at least two arguments 20, 30, S4; The last step can be performed by a classification unit. In other words, the query triplet 10 is assigned to true or false.

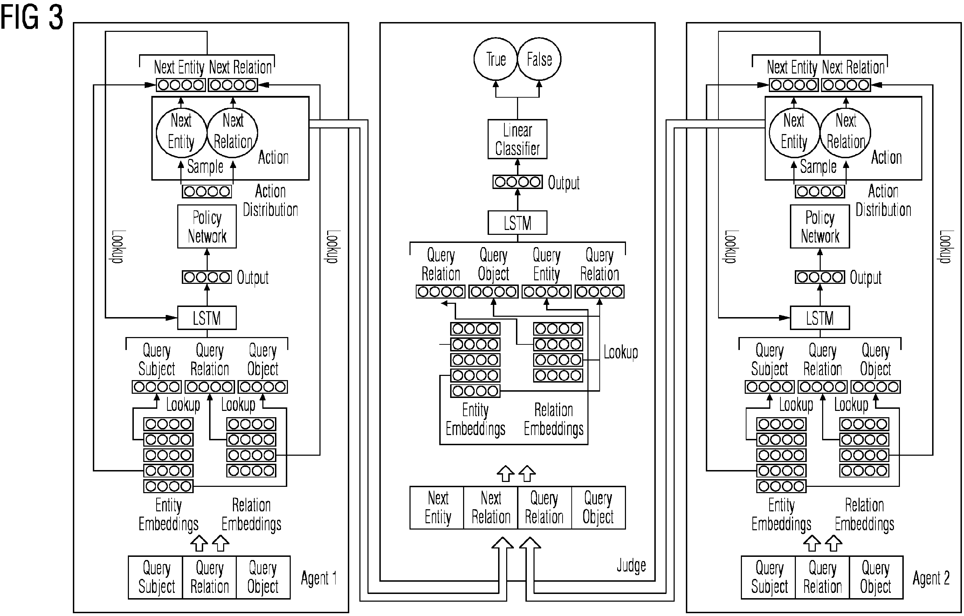

The extracting units are intelligent agents according to an embodiment. The classification unit is a supervised judger or classifier according to an embodiment. Figure 3 shows the method according to an embodiment with the two agents and the classifier.

### Intelligent agents

One agent is designated as arguing for the affirmative position and the second agent is designated as arguing for the opposing position. Arguments 20, 30 are phrased in terms of paths present in the knowledge graph that emanate from the query triplet 10. Each agent constructs arguments 20, 30, which are then evaluated by the classifier. The number of arguments 20, 30 can be predefined and thus fixed.

### Classifier

The classifier evaluates the provided affirmative and opposing arguments 20, 30 and their respective quality. Further, the classifier assigns a winning party to the query triplet 10 on the basis of these arguments 20, 30. The resulting prediction can be generated by adopting the winning party's position.

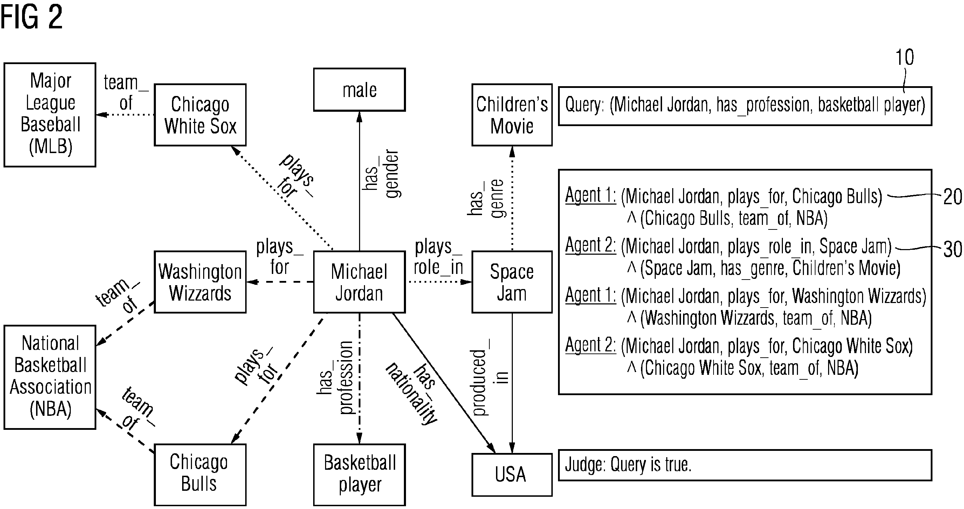

Figure 2 illustrates an exemplary debate between the two intelligent agents according to an embodiment. The intelligent agents debate whether Michael Jordan is a professional basketball player. The agent 1 extracts affirmative arguments 20 from the knowledge graph that the fact is true, whereas agent 2 argues that the fact is false. In this example, the classifier decides that Michael Jordan is a professional basketball player based on the arguments 20, 30. In other words, the query triplet 10 is classified as true. The query triplet can be added to the knowledge graph, in particular after further confirmation.

In principle, the two agents learn a policy conditioned on the query triplet that allows them to identify how to transition from one node in the knowledge graph to an adjacent node (the process of constructing an argument) to convince the classifier of their beliefs regarding the query triplet. More precisely, the two agents traverse the knowledge graph sequentially and select the next hop based on a policy that takes previous transitions and the query triplet into account. All paths are processed by the classifier that tries to distinguish between true and false triples. While the parameters of the classifier are fitted in a supervised fashion, both agents are trained to navigate through the knowledge graph using reinforcement learning. The transitions are added to the current path extending the argument.

Contrary to prior art, the aforementioned method is interpretable because the arguments allow the user to get an understanding of the decision of the classifier.

Moreover, in contrast to one-way black-box configurations, comprehensible machine learning methods allow to build systems where both machines and users can interact with each other.

Moreover, mining evidence for both the thesis and the antithesis can make the classifier more robust towards contradictory evidence or corrupted data. Last but not least, the use of paths in the knowledge graphs for argumentation opens up a straightforward way to address knowledge dynamics and more specifically fact retraction, as argument based on this fact can be identified easily.

### Reference signs

- 10: query triplet
- 20: affirmative argument
- 30: opposing argument
- S1 to S4: Method steps 1 to 4

## Claims

1. Method for assigning at least one query triplet (10) to at least one respective class, wherein the at least one respective class is true or false, comprising the steps of:
a. Providing the at least one query triplet (10) and a knowledge graph with a plurality of triples (S1);
b. Extracting at least one affirmative argument (20) using reinforcement learning on the basis of the at least one query triplet (10) and the knowledge graph (S2); wherein the at least one affirmative argument indicates that the at least one query triplet is true;
c. Extracting at least one opposing argument (30) using reinforcement learning on the basis of the at least one query triplet (10) and the knowledge graph (S3); wherein the at least one opposing argument (30) indicates that the at least one query triplet is false; and
d. Assigning the query triplet (10) to the at least one respective class using supervised machine learning depending on the at least two arguments (20, 30)(S4).

2. Method according to claim 1, wherein the supervised machine learning is a learning-based approach selected from the group, comprising
neural network, support vector machine, logistic regression, linear regression and random forest.

3. Method according claim 1 or claim 2, wherein the method further comprises the step of
performing at least one action.

4. Method according to claim 3,
performing the at least one action depending on at least one determined score, wherein
the at least one score is determined by using machine learning on the basis of the at least one query triplet (10) and the knowledge graph and
the at least one determined score is assigned to the query triplet.

5. Method according to claim 4, wherein the at least one action is performed, if the at least one score equals or exceeds a predefined threshold.

6. Method according to claims 3 - 5, wherein the at least one action is selected from the group, comprising:
- Outputting the at least one query triplet (10), the knowledge graph, the at least two arguments (20, 30), the at least one class, the at least one score and/or any other related notification;
- Storing the at least one query triplet (10), the knowledge graph, the at least two arguments (20, 30), the at least one class, the at least one score and/or any other related notification;
- Displaying the at least one query triplet (10), the knowledge graph, the at least two arguments (20, 30), the at least one class, the at least one score and/or any other related notification;
- Transmitting the at least one query triplet (10), the knowledge graph, the at least two arguments (20, 30), the at least one class, the at least one score and/or any other related notification to a computing unit for further processing; and
- Evaluating the at least one query triplet (10) with the assigned at least one class and/or score.

7. Method according to claim 6, wherein the method further comprises the step of
confirming the at least one query triplet (10) or overwriting the at least one query triplet (10) depending on the evaluation.

8. Method according to claim 6 or claim 7,
wherein the evaluation and/or confirmation is performed by a user.

9. Method according to claim 8, wherein the method further comprises the step of
Extending the knowledge graph with the query triplet (10) after confirmation.

10. A computer program product directly loadable into an internal memory of a computer, comprising software code portions for performing the steps according to any one of the preceding claims when said computer program product is running on a computer.

11. System for assigning at least one query triplet (10) to at least one respective class, wherein the at least one respective class is true or false,
comprising:
a. Receiving unit for providing the at least one query triplet (10) and a knowledge graph with a plurality of triples (S1);
b. Extracting unit for extracting at least one affirmative argument (20) using reinforcement learning on the basis of the at least one query triplet (10) and the knowledge graph (S2); wherein
the at least one affirmative argument (20) indicates that the at least one query triplet (10) is true;
c. Extracting unit for extracting at least one opposing argument (30) using reinforcement learning on the basis of the at least one query triplet (10) and the knowledge graph (S3); wherein
the at least one opposing argument (30) indicates that the at least one query triplet (10) is false; and
d. Classification unit for assigning the at least one query triplet (10) to the at least one respective class using supervised machine learning depending on the at least two arguments (20, 30) (S4).
